# EUROPÄISCHE PATENTSCHRIFT

(11) **EP 1 497 163 B1**
(45) Veröffentlichungstag und Bekanntmachung des Hinweises auf die Patenterteilung: **27.12.2006**
(21) Anmeldenummer: 03706250.2
(22) Anmeldetag: 27.01.2003
(51) Int. Cl.: B60T 13/14, B60T 11/21

(54) **BREMSSYSTEM**
BRAKE SYSTEM
SYSTEME DE FREINAGE

(30) Priorität: 19.04.2002 DE 10217631
(43) Veröffentlichungstag der Anmeldung: 19.01.2005
(73) Patentinhaber: Bosch Rexroth AG, 70184 Stuttgart (DE)
(72) Erfinder: MIES, Hubertus, 97816 Lohr (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2003/000208
(87) Internationale Veröffentlichungsnummer: WO 2003/089283

(56) Entgegenhaltungen:
- EP-A- 1 201 523
- WO-A-01/30625
- US-A- 5 281 007

## Beschreibung

Die Erfindung betrifft ein Bremssystem für ein mobiles Arbeitsgerät gemäß dem Oberbegriff des Patentanspruches 1.

Derartige Bremssysteme werden bei schweren Fahrzeugen der Bau-, Land- und Forstwirtschaft sowie bei Sonderfahrzeugen eingesetzt und müssen bei niedrigen Bedienungskräften ein hohes Maß an Betriebssicherheit aufweisen.

Die genannten Fahrzeuge, beispielsweise Forstmaschinen oder Baggerlader sind mit einem Fahrerdrehsitz ausgeführt, der einmal in Richtung der normalen Fahrtrichtung nach vorne orientiert ist und im Arbeitseinsatz um 180° nach "hinten" gedreht wird. In dieser Arbeitsposition bedient der Fahrer an der Rückseite des Fahrzeuges angeordnete Arbeitsgeräte, wobei der Fahrantrieb und das Bremssystem des Fahrzeuges immer noch betätigt werden müssen. Entsprechend dieser beiden Betriebszustände sind die oben genannten Fahrzeuge für die "Vorwärtsfahrt" (meist Straßenfahrt, Transport von Holz, etc.) und für die "Rückwärtsfahrt" (Bäume fällen, etc.) mit jeweils einem Bremspedal ausgeführt, über das jeweils ein Fremdkraftbremsventil zur Ansteuerung der Radbremszylinder betätigt werden kann.

Bei den bisher bekannten Lösungen wird bei Betätigung des für die "Rückwärtsfahrt" vorgesehenen Bremspedals ein Pilotdruck erzeugt, der an dem für die "Vorwärtsfahrt" vorgesehenen Fremdkraftbremsventil einen entsprechenden Bremsdruck zur Ansteuerung der Radbremszylinder erzeugt. Dementsprechend muß das für die Vorwärtsfahrt vorgesehene Hauptfremdkraftbremsventil mit einem Pilotanschluss versehen sein, über den der vom Nebenfremdkraftbremsventil (Rückwärtsfahrt) erzeugte Pilotdruck abgegriffen und an eine in Richtung Bremseingriff wirksame Steuerfläche eines Steuerkolbens angelegt werden kann. Ein derartiges, beispielsweise aus der JP 9142271 bekanntes Fremdkraftbremsventil mit Pilotanschluss wird nur als Sonderventil zur Verfügung gestellt und ist entsprechend teuer.

In der US 5.281.007 ist ein Bremssystem beschrieben, bei dem in einer Anfangsphase des Bremsvorgangs einer Betriebsbremse Druckmittel aus einem ersten Speicher zugeführt wird und nach einer vorbestimmten Zeitdauer dieser Betriebsbremse Druckmittel aus einem zweiten Speicher mit höherem Druck zugeführt wird.

Demgegenüber liegt der Erfindung die Aufgabe zugrunde, ein Bremssystem für ein mobiles Arbeitsgerät zu schaffen, bei dem der vorrichtungstechnische Aufwand gegenüber den herkömmlichen Lösungen minimal ist.

Diese Aufgabe wird durch ein Bremssystem für ein mobiles Arbeitsgerät mit der Merkmalskombination des Patentanspruches 1 gelöst.

Erfindungsgemäß hat das Bremssystem ein der "Vorwärtsfahrt" (Strassenfahrt) zugeordnetes Hauptfremdkraftbremsventil (im folgenden Hauptbremsventil genannt) und ein der "Rückwärtsfahrt" (Baumfällen,..) zugeordnetes Nebenfremdkraftbremsventil (im folgenden Nebenbremsventil genannt), wobei ein Tankanschluss des Hauptbremsventils mit dem Bremsanschluss des Nebenbremsventils verbunden ist. D.h. in der Grundposition des Hauptbremsventils ist dessen Bremsanschluss über das Nebenbremsventil mit dem Tank verbunden. Bei Betätigung des Nebenbremsventils liegt der am Bremsanschluss des Nebenbremsventils entstehende Bremsdruck am Tankanschluss des unbetätigten Hauptbremsventils an, so daß dieser Bremsdruck über den Tankanschluss auch an dem oder den Bremsanschlüssen des Hauptbremsventils anliegt und so die Radbremszylinder betätigt werden.

Diese Konstruktion ermöglicht es, das erfindungsgemäße Bremssystem durch Standardventile zu realisieren, so daß eine wesentlich kostengünstigere und einfacher aufgebaute Lösung als bei den herkömmlichen Bremssystemen mit Sonderventilen ermöglicht wird.

Vorteilhaft hat das Hauptbremsventil Steuerkolben, die über eine in einen Federraum aufgenommene Regelfederanordnung vorgespannt sind. Dieser Federraum ist bei einer Variante des Hauptbremsventils mit dem Tankanschluss und bei einer Alternativvariante mit der Atmosphäre verbunden. Bei der erstgenannten Alternative kann bei gleichzeitiger Betätigung beider Bremsventile ein Bremsdruck aufgebaut werden, der größer ist als der jeweils über die Bremsventile aufgebrachte Bremsdruck, während bei der zweiten Alternative der größere der beiden Bremsdrücke durchgeschaltet wird.

Bei einer besonders bevorzugten Variante des Bremssystems ist das Hauptbremsventil mit einer Hochdruckdichtung ausgeführt, so daß auch bei hohen am Tankanschluss anliegenden Bremsdrücken keine Leckage entstehen kann.

Es wird bevorzugt, wenn das Hauptbremsventil als 2-Kreis-Ventil und das der Rückwärtsfahrt zugeordnete Nebenbremsventil als 1-Kreis-Fremdkraftbremsventil ausgeführt ist.

Bei einer vorteilhaften Variante sind die Betätigungselemente der beiden Bremsventile als Fußpedale ausgeführt.

Sonstige vorteilhafte Weiterbildungen der Erfindung sind Gegenstand der weiteren Unteransprüche.

Im folgenden wird ein bevorzugtes Ausführungsbeispiel der Erfindung anhand schematischer Zeichnungen näher erläutert. Es zeigen:
Figur 1 zeigt ein Grundschema eines Bremssystems für ein mobiles Arbeitsgerät;
Figur 2 ein Schaltbild eines Hauptfremdkraftbremsventils und eines Nebenfremdkraftbremsventils des Bremssystems aus Figur 1 und
Figur 3 einen Schnitt durch ein Hauptfremdkraftbremsventil gemäß Figur 2 und
Figur 4 eine Variante des Hauptbremsventils gemäß Figur 3.

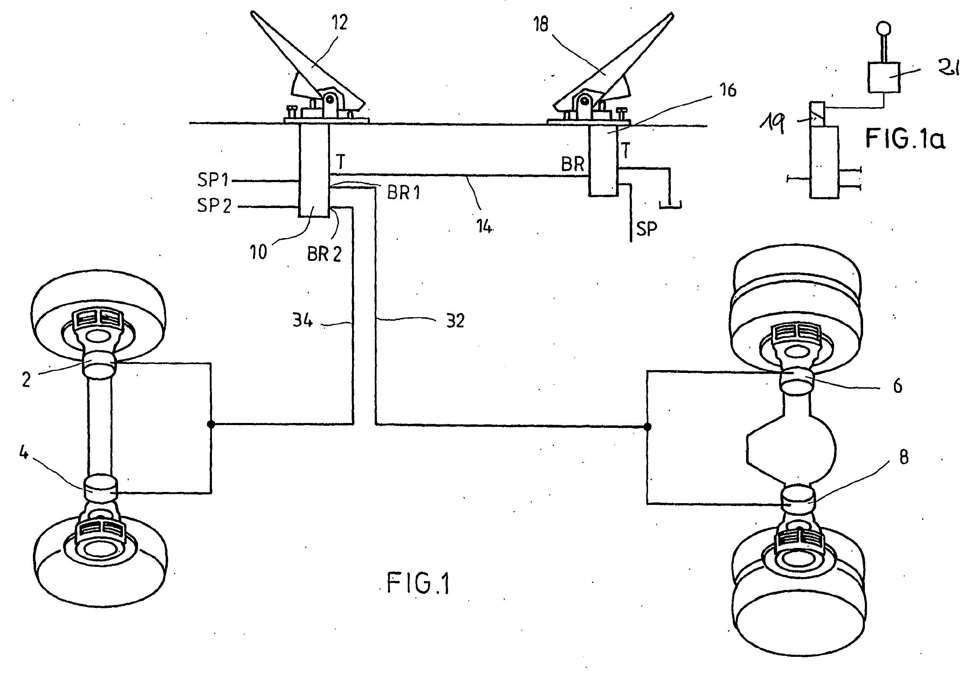

Figur 1 zeigt ein stark vereinfachtes Schema eines Bremssystems 1 einer Forstmaschine oder eines Baggerladers. Das Fahrzeug hat vier jeweils auf eine Radbremse wirkende Radbremszylinder 2, 4, 6, 8, die hydraulisch über eine 2-Kreis-Bremsanlage ansteuerbar sind. Die Ansteuerung der Radbremszylinder 2,4,6,8 erfolgt über ein 2-Kreis-Fremdkraftbremsventil, im folgenden Hauptbremsventil 10 genannt. Dieses hat zwei Bremsanschlüsse BR1, BR2, über die die der Hinterachse zugeordneten Radbremszylinder 6, 8 bzw. die der Vorderachse zugeordneten Radbremszylinder 2, 4 mit einem Bremsdruck beaufschlagbar sind. Das Hauptventil 10 hat des weiteren zwei mit Hydrospeichern verbundene Speicheranschlüsse SP1, SP2. Das Hauptbremsventil 10 hat des weiteren noch zwei Anschlüsse zur Bremsdruckrückführung, die in der Darstellung gemäß Figur 1 nicht gezeigt sind. Die Betätigung des Hauptbremsventils 10 erfolgt mittels eines in Richtung "Vorwärtsfahrt" angeordneten Fußpedals 12, über das Steuerkolben des Hauptbremsventils 10 betätigbar sind.

Gemäß Figur 1 ist ein Tankanschluss T des Hauptbremsventils 10 über eine Verbindungsleitung 14 mit einem Bremsanschluss BR eines Nebenfremdkraftbremsventils, im folgenden Nebenbremsventil 16 genannt, verbunden. Dieses hat einen Tankanschluss T sowie einen mit einem oder den Hydrospeichern verbundenen Speicheranschluss SP und wird über ein weiteres Fußpedal 18 betätigt. Sowohl beim Hauptbremsventil 10 als auch beim Nebenbremsventil 16 handelt es sich im wesentlichen um Standardkomponenten, wie sie beispielsweise in den von der Anmelderin verteilten Datenblättern RD 60 146 (Typ LT07) und RD 66 144 (Typ LT05) dargestellt sind. Das weitere Fußpedal 18 ist in Richtung "Rückwärtsfahrt" des Fahrzeuges orientiert und wird aus der Position "Vorwärtsfahrt" durch Verschwenken des Fahrersitzes um 180° erreicht.

In der dargestellten Grundposition, d.h. bei unbetätigten Fußpedalen 12, 18 ist der Bremsanschluss BR des Nebenbremsventils 16 mit dem Tankanschluss T verbunden. Die beiden Bremsanschlüsse BR1 und BR2 des Hauptbremsventils 10 sind ebenfalls über dessen Tankanschluss T, die Verbindungsleitung 14 und den Bremsanschluss BR des Nebenbremsventils 16 mit dem zum Druckmitteltank T führenden Tankanschluss verbunden.

Wie in Figur 1a dargestellt, kann zur Betätigung der Bremsventile 10, 16 anstelle der Fußpedale 12, 18 oder ähnlicher mechanischer Handhaben auch jeweils ein Proportionalmagent 19 verwendet werden, der beispielsweise über einen Joystick 21 angesteuert wird.

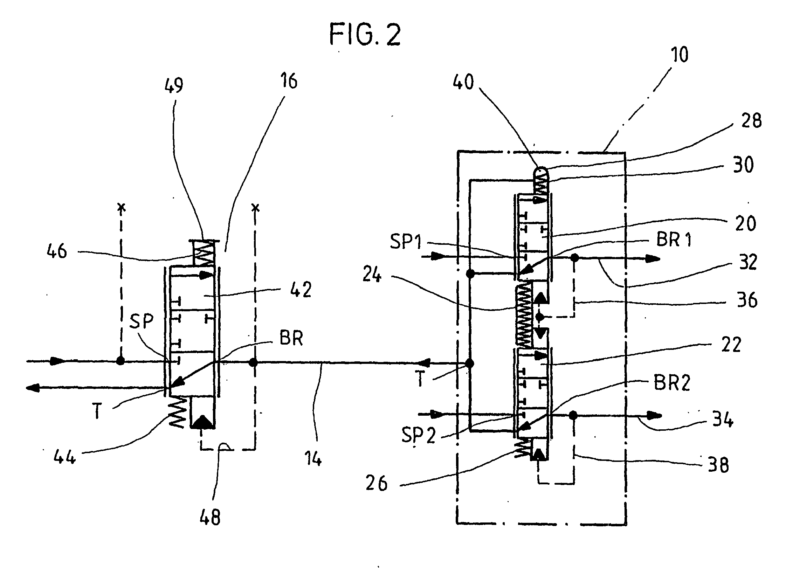

Weitere Einzelheiten des Bremssystems 1 erschließen sich aus der Darstellung gemäß Figur 2, in der die Schaltbilder des Hauptbremsventils 10 und des Nebenbremsventils 16 dargestellt sind.

Die beiden Bremsventile 10, 16 sind im Prinzip jeweils Druckreduzierventile, über die ein proportional zum Weg der Fußpedale 12, 18 verlaufender Bremsdruck einstellbar ist.

Das als 2-Kreis-Ventil ausgeführte Hauptbremsventil 10 hat zwei stetig verstellbare Steuerkolben 20, 22, die mechanisch miteinander in Wirkverbindung stehen. Zwischen den beiden Kolben erstreckt sich eine Rückstellfeder 24, die die beiden Steuerkolben 20, 22 auseinander drückt. In Gegenrichtung sind die beiden Steuerkolben 20, 22 in eine Anschlagposition bringbar.

Der untere (Figur 2) Steuerkolben 22 ist in Richtung zum oberen Steuerkolben 20 durch eine Druckfeder 26 beaufschlagt. Die Axialverschiebung der beiden Steuerkolben 20, 22 erfolgt über einen Stößel 28, der über eine Regelfedereinrichtung 30 auf den Steuerkolben 20 wirkt. Die Verschiebung des Stößels 28 erfolgt über das in Figur 1 dargestellte verschwenkbare Fußpedal 12.

In der dargestellten Grundposition der Steuerkolben 20, 22 sind die beiden Speicheranschlüsse SP1 und SP2 abgesperrt, während die beiden Bremsanschlüsse BR1, BR2 mit dem Tankanschluss T verbunden sind.

Der in der an den Bremsanschluss BR1 angeschlossenen Bremsleitung 32 anliegende Druck wird über eine Steuerleitung 36 abgegriffen und liegt jeweils an einem Steuerraum an, über den die beiden Steuerkolben 20, 22 in Richtung der Kraft der Rückstellfeder 24 beaufschlagt sind.

Von der unteren Bremsleitung 34 zweigt eine weitere Steuerleitung 38 ab, über die der am Bremsanschluss BR2 anliegende Bremsdruck abgegriffen und einem in Richtung der Druckfeder 26 wirkenden, dem Steuerkolben 22 zugeordneten Steuerraum gemeldet wird.

Beim Niederdrücken des Fußpedals 12 wird der Stößel 28 in der Darstellung gemäß Figur 2 nach unten bewegt, so daß der Steuerkolben 20 entsprechend verschoben wird. Dieser liegt am Steuerkolben 22 an, so daß dieser ebenfalls nach unten bewegt wird. Durch diese Axialverschiebung der Steuerkolben 20, 22 werden zunächst die jeweiligen Tankanschlüsse T abgesperrt und dann die Verbindung zwischen den Bremsanschlüssen BR1, BR2 und SP1 bzw. SP2 aufgesteuert. Der Druck in den Bremsleitungen 32, 34 wird über die Steuerleitungen 36, 38 abgegriffen, so daß die Steuerkolben 20,22 bei Konstanthalten der Auslenkung des Bremspedals 18 eine Regelstellung einnehmen, in der der in die Bremsleitungen 34, 36 eingesteuerte Druck konstant ist. Die Betätigungskraft des Fußpedals 12 ist dabei proportional zu dessen Auslenkung, so daß der Fahrer eine gute Rückmeldung über die von ihm eingestellte Bremskraft hat. Der die Regelfederanordnung 30 aufnehmende Federraum 40 des Hauptbremsventils ist mit dem Tankanschluss T verbunden.

Bei Loslassen des Fußpedals 18 bewegen sich die Steuerkolben 20, 22 durch die Kraft der Druckfeder 26 und der Rückstellfeder 24 sowie der noch wirkenden Steuerdrücke in ihre dargestellte Ausgangsposition zurück.

In dieser Ausgangsposition sind die beiden Bremsleitungen 32, 34 über die Bremsanschlüsse BR1 bzw. BR2 mit dem Tankanschluss T verbunden, so daß das Druckmittel über die Verbindungsleitung 14 zum Bremsanschluss BR des Nebenbremsventils 16 strömt.

Das Nebenbremsventil 16 hat einen Schieber 42, der einerseits von der Kraft einer Feder 44 und andererseits über eine Regelfedereinrichtung 46 und einen mit dem Fußpedal 18 verbundenen Stößel 49 mit einer Stellkraft beaufschlagbar ist. Der in der Verbindungsleitung 14 anliegende Druck wird über einen Steuerkanal 48 abgegriffen und liegt an einer in Richtung der Feder 44 wirkenden Stirnfläche des Schiebers 42 an.

In seiner federvorgespannten Grundposition verbindet der Schieber 42 den Bremsanschluss BR mit dem Tankanschluss T, so daß auch die Bremsanschlüsse BR1 und BR2 des Hauptbremsventils 10 über dessen Tankanschluss T, die Verbindungsleitung 14, den Bremsanschluss BR des Nebenbremsventils 16 und dessen Tankanschluss T mit dem Druckmitteltank verbunden ist.

Bei Betätigung des Fußpedals 18 wird der Stößel 49 nach unten bewegt (Ansicht nach Figur 2), so daß der Schieber 42 durch die Kraft der Regelfedereinrichtung 46 nach unten verschoben wird. Durch diese Axialverschiebung des Schiebers 42 wird zunächst der Tankanschluss T abgesperrt und anschließend die Verbindung zwischen dem Speicheranschluss SP und dem Bremsanschluss BR aufgesteuert. Der am Bremsanschluss BR entstehende Bremsdruck 48 wird über den Steuerkanal 48 abgegriffen und liegt an der Rückseite des Steuerschiebers 42 an. Das druckbeaufschlagte Druckmittel strömt über die Verbindungsleitung 14, den Tankanschluss T des Hauptbremsventils 10 (befindet sich in der dargestellten Grundposition) und die beiden Bremsanschlüsse BR1 und BR2 in die beiden Bremsleitungen 32 bzw. 34, so daß die Radbremszylinder 2, 4 und 6, 8 der beiden Bremskreise betätigt werden. Der Schieber 42 stellt sich bei konstanter Auslenkung des Fußpedals 18 in Abhängigkeit von dem auf seine Rückseite wirkenden Bremsdruck und der über die Regelfedereinrichtung 46 und die Feder 44 aufgebrachten Kraft in eine Regelposition ein, in der der in die Bremsleitungen 32, 34 eingesteuerte Bremsdruck konstant gehalten wird.

Die Erfindung zeichnet sich durch einen äußerst einfachen Aufbau bei zuverlässiger Funktion aus. Ein Problem der erfindungsgemäßen Lösung besteht darin, daß bei der Betätigung des Fußpedals 18 und einem sich entsprechend aufbauenden Bremsdruck, dieser am Tankanschluss T und damit im Federraum 40 des Hauptbremsventils 10 anliegt. Es müssen daher besondere Vorkehrungen getroffen werden, um diesen Bereich gegen Leckage zu schützen.

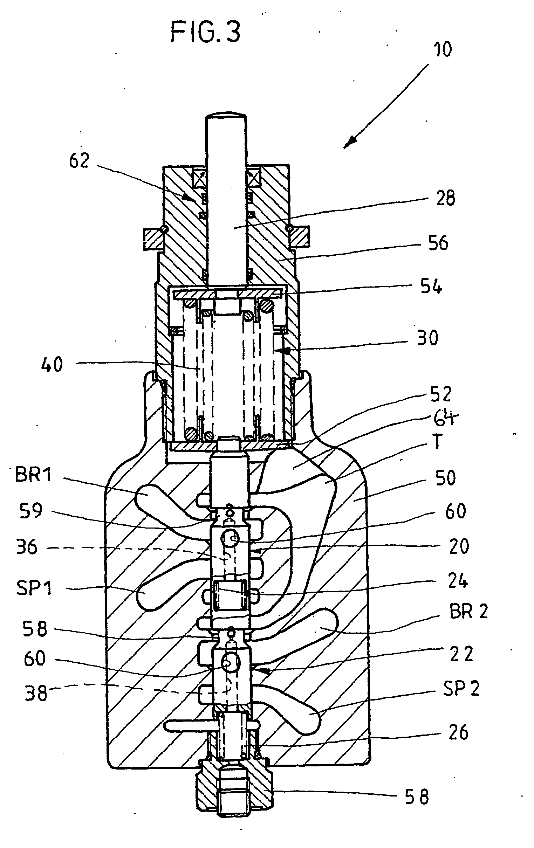

Figur 3 zeigt einen Schnitt durch das Hauptbremsventil 10. Wie bereits erwähnt, handelt es sich - abgesehen von den Dichtungen - um ein per se bekanntes Standardbauteil, so daß im folgenden nur die wesentlichen Bauelemente dieses Hauptbremsventils 10 beschrieben werden. Dieses hat ein Ventilgehäuse 50, an dem die Bremsanschlüsse BR1, BR2, die Speicheranschlüsse SP1, SP2 und der Tankanschluss T sowie die vorgenannten nicht dargestellten Bremsdruckrückführungen ausgebildet sind. Im Ventilgehäuse 50 sind die beiden Steuerkolben 20, 22 geführt, die in der dargestellten Grundposition an einander anliegen und zwischen denen die Rückstellfeder 24 angeordnet ist.

Der in Figur 3 obere Stirnflächenabschnitt des Steuerkolbens 20 taucht in den von einem Einsatz 56 und dem Ventilgehäuse 50 begrenzten Federraum 40 ein. Auf diesen Endabschnitt des Steuerkolbens 20 ist ein Federteller 52 aufgesetzt, an dem die Regelfederanordnung 30 angreift. Diese ist über einen weiteren Federteller 54 an dem Stößel 28 abgestützt, der mittels des Fußpedals 12 betätigbar ist und in dem Einsatz 56 geführt ist.

Die in Figur 3 untere Stirnfläche des Steuerkolbens 22 wird durch die Druckfeder 26 beaufschlagt, die an einer Verschlussschraube 58 abgestützt ist. Die Steuerleitungen 36, 38 sind bei der dargestellten Variante durch Winkelbohrungen der Steuerkolben 20 bzw. 22 ausgebildet.

Die Steuerkanten zum Zusteuern des Tankanschlusses T und zum Aufsteuern der Verbindung zwischen den Bremsanschlüssen BR1, BR2 und SP1 bzw. SP2 werden in an sich bekannter Weise durch Ringnuten 59 bzw. Radialausnehmungen 60 der Steuerkolben 20, 22 ausgebildet (siehe hierzu beispielsweise DE 43 22 634 C2).

Wie vorstehend erwähnt, liegt bei einer Betätigung des Fußpedals 18 im Federrraum 40 der über die Verbindungsleitung 14 eingespeiste Bremsdruck an, so daß insbesondere die Dichtungsanordnung 62 zwischen dem axial verschiebbaren Stößel 28 und dem Einsatz 56 hohen statischen und dynamischen Belastungen ausgesetzt ist. Zur Vermeidung von Leckagen werden daher bei der erfindungsgemäßen Lösung insbesondere für die Dichtungsanordnung und ggfs. alle sonstigen hoch belasteten Dichtungen Hochdruckdichtungen anstelle der üblicherweise in diesem Bereich eingesetzten Niederdruckdichtungen verwendet. D.h., das in Figur 3 dargestellte Hauptbremsventil 10 unterscheidet sich von dem im Datenblatt RD 66 146 dargestellten Standard-2-Kreis-Fremdkraftbremsventil im wesentlichen nur dadurch, daß in den mit dem Tankanschluss verbundenen Druckräumen anstelle von Niederdruckdichtungen Hochdruckdichtungen eingesetzt werden, deren Aufbau per se bekannt ist.

Bei dem vorbeschriebenen Aufbau liegt im Federraum 40 des Ventils 10 der am Tankanschluss T herrschende Druck an. Falls nur das Hauptbremsventil 10 betätigt wird, so ist der Federraum vom Druck entlastet und es wird ein Bremsdruck entsprechend dem Maß aufgebaut, in dem die Regelfeder 30 zusammengedrückt wird. Wird nur das Nebenbremsventil 16 betätigt, so wird der Bremsdruck so hoch, wie der in den Tankanschluss des Bremsventils 10 eingesteuerte Druck. Bei gleichzeitiger Betätigung beider Bremsventile 10, 16 wirken auf die Steuerkolben 20, 22 des Hauptbremsventils 10 in Richtung Bremsdruckaufbau die Federkraft (Regelfeder 30) und der in den Tankanschluss T eingesteuerte Druck, so dass bei entsprechend geladenen Speichern ein höherer Bremsdruck als bei alleiniger Betätigung der Bremsventile 10, 16 aufgebaut werden kann. Insbesondere bei der Verwendung eines Joysticks (Figur 1a) kann dann bei bestimmten Betriebssituationen ein Maximalbremsdruck aufgebracht werden.

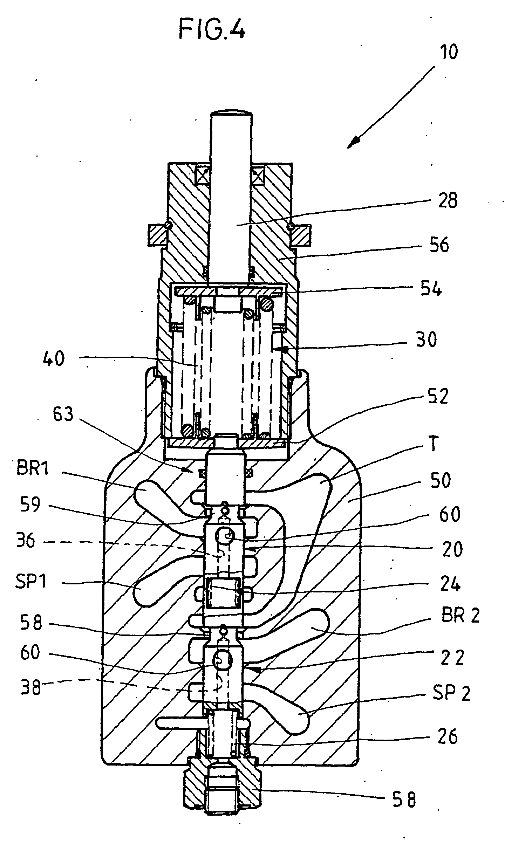

Bei dem vorbeschriebenen Ausführungsbeispiel gemäß Figur 3 ist der Tankanschluss T über einen Verbindungskanal 64 mit dem Federraum 40 verbunden, so dass die Kolben 30 durch den Druck am Tankanschluss T in Bremsdruckaufbaurichtung beaufschlagt sind, so dass der vorstehend beschriebene erhöhte Bremsdruck aufgebracht werden kann. In Figur 4 ist eine Variante dargestellt, bei der der Tankanschluss 40 hydraulisch vom Tankanschluss T getrennt ist. Bei dieser Variante ist im Einbindungsbereich der die Steuerkolben 20, 22 aufnehmenden Ventilbohrung in den Federraum 40 eine den Steuerkolben 20 umgreifende Hochdruckdichtung 63 angeordnet und der Verbindungskanal 64 ist verschlossen, so dass der Federraum 40 nicht mit dem Tankanschluss sondern mit der Atmosphäre verbunden ist. Werden nun bei dieser Variante beide Bremsventile 10, 16 gleichzeitig betätigt, so führt dies nicht zu einer Bremsdruckerhöhung wie beim vorbeschriebenen Ausführungsbeispiel, sondern es wird der größere der beiden über die Bremsventile 10, 16 aufgebaute Bremsdruck durchgeschaltet. Bei Betätigung des Hauptbremsventils 10 bzw. des Nebenbremsventils 16 stellt sich der gleich Bremsdruck wie bei dem vorbeschriebenen Ausführungsbeispiel gemäß Figur 3 ein. D. h., bei dem in Figur 4 dargestellten Ausführungsbeispiel ist der maximale Bremsdruck auf den maximalen, über die Bremsventile 10, 16 einsteuerbaren Bremsdruck begrenzt, während bei dem Ausführungsbeispiel gemäß Figur 3 ein höherer Bremsdruck aufgebaut werden kann. Dem entsprechend muss bei dem Ausführungsbeispiel gemäß Figur 3 eine Dichtung eingebaut werden, die höhere Drücke aushält, als die Hochdruckdichtung 63 beim Ausführungsbeispiel gemäß Figur 4. So kann es beispielsweise ausreichend sein, eine mit einem Stützring versehene Hochdruckdichtung für das Ausführungsbeispiel gemäß Figur 4 vorzusehen, die für einen Maximaldruck von 110 bar ausgelegt ist, während beim Ausführungsbeispiel gemäß Figur 3 eine Dichtung mit wesentlich höherem Maximaldruck beispielsweise 250 bar verwendet wird.

Bei dem Nebenbremsventil 16 handelt es sich um ein Standardbauelement, bei dem auch im Hinblick auf die Dichtungen keine wesentlichen Änderungen erforderlich sind, so daß auf eine ausführliche Beschreibung verzichtet werden kann.

Offenbart ist ein Bremssystem für ein mobiles Arbeitsgerät, beispielsweise für eine Forstmaschine oder einen Baggerlader. Das mobile Arbeitsgerät ist mit zwei Fremdkraftbremsventilen zur Bremsbetätigung versehen, die vom Fahrer je nach Orientierung im Fahrerhaus - beispielsweise bei Straßenfahrt und bei Blick des Fahrers nach hinten - betätigt werden können. Erfindungsgemäß ist ein Tankanschluss eines Fremdkraftbremsventils mit dem Bremsanschluss des zweiten Fremdkraftbremsventils verbunden, so daß das erste Fremdkraftbremsventil über den Tankanschluss des zweiten Fremdkraftbremsventils mit dem Druckmitteltank verbunden ist und bei Betätigung des zweiten Fremdkraftbremsventils der entstehende Bremsdruck über den Tankanschluss des ersten Fremdkraftbremsventils in dieses eingespeist wird, so daß dessen Bremsanschlüsse entsprechend mit Bremsdruck beaufschlagt sind.

### Bezugszeichenliste:

- 1: Bremssystem
- 2: Radbremszylinder
- 4: Radbremszylinder
- 6: Radbremszylinder
- 8: Radbremszylinder
- 10: Hauptbremsventil
- 12: Fußpedal
- 14: Verbindungsleitung
- 16: Nebenbremsventil
- 18: weiteres Fußpedal
- 19: Proportionalmagnet
- 20: Steuerkolben
- 21: Joystick
- 22: Steuerkolben
- 24: Rückstellfeder
- 26: Druckfeder
- 28: Stößel
- 30: Regelfederanordnung
- 32: Bremsleitung
- 34: Bremsleitung
- 36: Steuerleitung
- 38: Steuerleitung
- 40: Federraum
- 42: Schieber
- 44: Feder
- 46: Regelfedereinrichtung
- 48: Steuerkanal
- 49: Stößel
- 50: Ventilgehäuse
- 52: Federteller
- 54: weiterer Federteller
- 56: Einsatz
- 58: Verschlussschraube
- 59: Ringnut
- 60: Radialausnehmung
- 62: Dichtungsanordnung
- 63: Hochdruckdichtung
- 64: Verbindungskanal

## Patentansprüche

1. Bremssystem für ein mobiles Arbeitsgerät, bei dem ein erstes Hauptfremdkraftbremsventil (10) zur Betätigung einer Betriebsbremse und ein zweites Nebenfremdkraftbremsventil (16) zur Betätigung dieser Betriebsbremse vorgesehen sind, wobei jedes Bremsventil (10, 16) zumindest einen Tankanschluss (T), einen Speicheranschluss (SP, SP1, SP2) für einen Hydrospeicher und einen zur Betriebsbremse führenden Bremsanschluss (BR, BR1, BR2) hat und der Tankanschluss (T) des Hauptfremdkraftbremsventils (10) mit dem Bremsanschluss (BR) des Nebenfremdkraftbremsventils (16) verbunden ist, **dadurch gekennzeichnet, dass** die Bremsventile (10, 16) jeweils einzeln durch einen Fahrer des mobilen Arbeitsgerätes betätigbar sind, um das mobile Arbeitsgerät zu bremsen.

2. Bremssystem nach Patentanspruch 1, wobei jedes Fremdkraftbremsventil (10,16) zumindest einen Steuerkolben (20, 22, 42) hat, der in seiner Grundstellung den jeweiligen Tankanschluss (T) mit dem Bremsanschluss (BR, BR1, BR2) verbindet und den Speicheranschluss (SP, SP1, SP2) absperrt, und der über ein Betätigungselement (28, 49) und eine Regelfederanordnung (30, 46) verschiebbar ist, so daß die Verbindung zum Tankanschluss (T) abgesperrt und die Verbindung zwischen dem Speicheranschluss (SP, SP1, SP2) und dem Bremsanschluss (BR, BR1, BR2) aufgesteuert wird, wobei ein Federraum (40) der Regelfederanordnung (30) des Hauptfremdkraftbremsventils (10) mit dessen Tankanschluss (T) verbunden ist, und wobei das in den Federraum (40) eintauchende Betätigungselement mittels einer Hochdruckdichtung (62) abgedichtet ist.

3. Bremssystem nach Patentanspruch 1, wobei jedes Fremdkraftbremsventil (10, 16) zumindest einen Steuerkolben (20, 22, 42) hat, der in seiner Grundstellung den jeweiligen Tankanschluss (T) mit dem Bremsanschluss (BR, BR1, BR2) verbindet und den Speicheranschluss (SP, SP1, SP2) absperrt, und der über ein Betätigungselement (48, 49) und eine Regelfederanordnung (30, 46) verschiebbar ist, so dass die Verbindung zum Tankanschluss (T) abgesperrt und die Verbindung zwischen dem Speicheranschluss (SP, SP1, SP2) und dem Bremsanschluss (BR, BR1, BR2) aufgesteuert wird, wobei ein Federraum (40) der Regelfederanordnung (30) des Hauptfremdkraftbremsventils (10) mit der Atmosphäre verbunden ist und wobei eine die Steuerkolben (20, 22) aufnehmende Ventilbohrung über eine Hochdruckdichtung (63) gegenüber dem Federraum (40) abgedichtet ist.

4. Bremssystem nach einem der vorhergehenden Patentansprüche, wobei das Hauptfremdkraftbremsventil (10) als 2-Kreis-Bremsventil und das Nebenfremdkraftbremsventil (16) als 1-Kreis-Bremsventil ausgeführt ist.

5. Bremssystem nach einem der vorhergehenden Patentansprüche, wobei das Hauptfremdkraftbremsventil (10) ein Straßenfahrtbremsventil und das Nebenfremdkraftbremsventil (16) ein Arbeitsbremsventil ist.

6. Bremssystem nach einem der vorhergehenden Patentansprüche, wobei das Betätigungselement (28, 49) jeweils mittels eines Fußpedals (12, 18) oder eines Proportionalmagneten (19) betätigbar ist.

7. Bremssystem nach einem der vorhergehenden Patentansprüche, wobei das Hauptfremdkraftbremsventil und/oder das Nebenfremdkraftbremsventil ein 3-Wege-Druckreduzierventil ist.

## Claims

1. Brake system for a mobile work tool, wherein a first main non-muscular brake valve (10) for actuating a service brake and a second secondary non-muscular brake valve (16) for actuating this service brake are provided, each brake valve (10, 16) having at least a tank port (T), a reservoir port (SP, SP1, SP2) for a hydraulic accumulator, and a brake port (BR, BR1, BR2) leading to the service brake, and the tank port (T) of the main non-muscular brake valve (10) being connected with the brake port (BR) of the secondary non-muscular brake valve (16), **characterized in that** the brake valves (10, 16) are each separately operable by a driver of the mobile work tool in order to brake the mobile work tool.

2. Brake system in accordance with claim 1, wherein each non-muscular brake valve (10, 16) has at least one control piston (20, 22, 42) that connects the respective tank port (T) with the brake port (BR, BR1, BR2) and blocks the reservoir port (SP, SP1, SP2) when in its basic position, and which may be displaced through the intermediary of an operating element (28, 49) and a control spring assembly (30, 46), so that the connection to the tank port (T) is blocked and the connection between the reservoir port (SP, SP1, SP2) and the brake port (BR, BR1, BR2) is opened, with a spring chamber (40) of the control spring assembly (30) of the main non-muscular brake valve (10) being connected with the tank port (T) thereof, and the operating element plunging into the spring chamber (40) being sealed by means of a high-pressure seal (62).

3. Brake system in accordance with claim 1, wherein each non-muscular brake valve (10, 16) has at least one control piston (20, 22, 42) which connects the respective tank port (T) with the brake port (BR, BR1, BR2) and blocks the reservoir port (SP, SP1, SP2) when in its basic position, and which may be displaced through the intermediary of an operating element (48, 49) and a control spring assembly (30, 46), so that the connection towards the tank port (T) is blocked, and the connection between the reservoir port (SP, SP1, SP2) and the brake port (BR, BR1, BR2) is opened, wherein a spring chamber (40) of the control spring assembly (30) of the main non-muscular brake valve (10) is connected to atmosphere, and wherein a valve bore accommodating the control pistons (20, 22) is sealed against the spring chamber (40) through a high-pressure seal (63).

4. Brake system in accordance with any one of the preceding claims, wherein the main non-muscular brake valve (10) has the form of a dual circuit brake valve, and the secondary non-muscular brake valve (16) has the form of a single-circuit brake valve.

5. Brake system in accordance with any one of the preceding claims, wherein the main non-muscular brake valve (10) has the form of a road travel brake valve, and the secondary non-muscular brake valve (16) has the form of a work brake valve.

6. Brake system in accordance with any one of the preceding claims, wherein the operating element (28, 49) is adapted to be operated through a pedal (12, 18) or a proportional magnet (19), respectively.

7. Brake system in accordance with any one of the preceding claims, wherein the main non-muscular brake valve and/or the secondary non-muscular brake valve is a 3-way pressure reducing valve.

## Revendications

1. Système de freinage pour un engin de travail mobile, où sont prévues une première vanne de freinage principale actionnée par force extérieure (10) pour l'actionnement d'un frein de service et une deuxième vanne de freinage auxiliaire actionnée par force extérieure (16) pour l'actionnement dudit frein de service, chaque vanne de freinage (10, 16) étant pourvue d'au moins un raccord de réservoir (T), un raccord d'accumulateur (SP, SP1, SP2) pour un accumulateur hydraulique et un raccord de frein (BR, BR1, BR2) conduisant au frein de service, le raccord de réservoir (T) de la vanne de freinage principale actionnée par force extérieure (10) étant relié au raccord de frein (BR) de la vanne de freinage auxiliaire actionnée par force extérieure (16), **caractérisé en ce que** les vannes de freinage (10, 16) sont chacune individuellement actionnables par un conducteur de l'engin de travail mobile, pour freiner l'engin de travail mobile.

2. Système de freinage selon la revendication 1, où chaque vanne de freinage actionnée par force extérieure (10, 16) comporte au moins un piston de commande (20, 22, 42), reliant dans sa position initiale le raccord de réservoir (T) correspondant au raccord de frein (BR, BR1, BR2) et fermant le raccord d'accumulateur (SP, SP1, SP2), et déplaçable au moyen d'un élément d'actionnement (28, 49) et d'un dispositif à ressort de réglage (30, 46), de manière à fermer la liaison au raccord de réservoir (T) et à ouvrir la liaison entre le raccord d'accumulateur (SP, SP1, SP2) et le raccord de frein (BR, BR1, BR2), un logement de ressort (40) du dispositif à ressort de réglage (30) de la vanne de freinage principale actionnée par force extérieure (10) étant relié au raccord de réservoir (T) de celle-ci, et l'élément d'actionnement plongeant dans le logement de ressort (40) étant protégé en étanchéité par un joint pour haute pression (62).

3. Système de freinage selon la revendication 1, où chaque vanne de freinage actionnée par force extérieure (10, 16) comporte au moins un piston de commande (20, 22, 42), reliant dans sa position initiale le raccord de réservoir (T) correspondant au raccord de frein (BR, BR1, BR2) et fermant le raccord d'accumulateur (SP, SP1, SP2), et déplaçable au moyen d'un élément d'actionnement (48, 49) et d'un dispositif à ressort de réglage (30, 46), de manière à fermer la liaison au raccord de réservoir (T) et à ouvrir la liaison entre le raccord d'accumulateur (SP, SP1, SP2) et le raccord de frein (BR, BR1, BR2), un logement de ressort (40) du dispositif à ressort de réglage (30) de la vanne de freinage principale actionnée par force extérieure (10) étant relié à l'atmosphère, et un alésage de vanne recevant les pistons de commande (20, 22) étant protégé en étanchéité du logement de ressort (40) par un joint pour haute pression (63).

4. Système de freinage selon l'une des revendications précédentes, où la vanne de freinage principale actionnée par force extérieure (10) est réalisée comme vanne de freinage à 2 circuits, et la vanne de freinage auxiliaire actionnée par force extérieure (16) comme vanne de freinage à 1 circuit.

5. Système de freinage selon l'une des revendications précédentes, où la vanne de freinage principale actionnée par force extérieure (10) est une vanne de freinage de conduite, et la vanne de freinage auxiliaire actionnée par force extérieure (16) une vanne de freinage de travail.

6. Système de freinage selon l'une des revendications précédentes, où l'élément d'actionnement (28, 49) est respectivement manoeuvrable au moyen d'une pédale (12, 18) ou d'un aimant proportionnel (19).

7. Système de freinage selon l'une des revendications précédentes, où la vanne de freinage principale actionnée par force extérieure et/ou la vanne de freinage auxiliaire actionnée par force extérieure sont des vannes réductrices de pression à trois voies.
